Europäisches Patentamt

European Patent Office

Office européen des brevets

(19)

(11) Publication number: **0 110 538**
A2

(12)

# EUROPEAN PATENT APPLICATION

(21) Application number: 83306334.0

(22) Date of filing: 19.10.83

(51) Int. Cl.³: **F 16 H 3/08**
// F16H37/04

(30) Priority: 04.11.82 US 438998

(43) Date of publication of application: 13.06.84
Bulletin 84/24

(84) Designated Contracting States: DE FR GB IT SE

(71) Applicant: EATON CORPORATION, 100 Erieview Plaza,
Cleveland Ohio 44114 (US)

(72) Inventor: Morscheck, Timothy John, 5317 Burning Tree,
Kalamazoo Michigan 49002 (US)

(74) Representative: Douglas, John Andrew, Eaton House
Staines Road, Hounslow Middlesex TW4 5DX (GB)

(54) Automatic transmission with extended range.

(57) Disclosed is a powershift transmission (10) including a
first or main ratio change gear assembly (16) having input
synchronizing and a second or auxiliary gear assembly (20)
having output synchronizing. The main gear assembly in-
cludes two powerpaths (42, 44) each having a countershaft
(46, 80), a powershift friction clutch (54, 90) engageable to
connect the associated countershaft with an output shaft
(22), a forward speed ratio gear (50, 84) continuously con-
nected to a torque converter driven input shaft (32), another
forward speed ratio gear (52, 86) continuously connected to
a bypass input shaft (18), and a double-acting synchronizer
clutch (48, 82) for selectively connecting one of the ratio
gears with the countershaft while the powershift clutch is
disengaged. The auxiliary gear assembly is interposed be-
tween or associated with one of the paths (44) and output
shaft (22) for selectively changing the effective ratio of at
least one of the ratio gears of the associated path while the
powershift clutch of the associated path is disengaged.

0110538

# AUTOMATIC TRANSMISSION WITH EXTENDED RANGE

## CROSS-REFERENCE TO RELATED APPLICATIONS

This application is related to U.S. Application Serial Number 901,544, filed May 1, 1978 (now Patent 4,246,993); U.S. Application Serial Number 884,078, filed March 6, 1978 and now U.S. Application Serial Number 178,429, filed August 15, 1980; and U.S. Application Serial Number 288,724, filed July 31, 1981. Patent 4,246,993 and Applications 178,429 and 288,724 are assigned to the assignee of this application and are incorporated herein by reference.

## FIELD OF THE INVENTION

This invention relates to ratio change transmissions and in particular to automatic powershift transmissions employing synchronizers.

## BACKGROUND OF THE INVENTION

It is known in the transmission art to first synchronize and clutch a ratio gear with a transmission output shaft and to then powershift or clutch the gear with a transmission input shaft to complete a shift or ratio change. Such synchronizing, which may be referred to as output synchronizing, is also known in prior art transmissions having plural, independent powerpaths each including a countershaft and a plurality of ratio gears associated with synchronizer clutches. Several of these plural powerpath transmissions are alternately powershifted from one path to the other by powershift friction clutches interposed between the transmission input and the powerpaths.

When these alternately powershifted, plural powerpath transmissions are used in combination with a torque converter, the sole source of power input to the paths is through the rather inefficient torque converter unless torque converter bypass or lockup clutches are used. Such clutches add complexity and cost to the transmission.

Further, these alternately powershifted, plural powerpath transmissions have not been readily expanded to provide additional ratio coverage and/or powershifting of additional ratio coverage with synchronizers.

SUMMARY OF THE INVENTION

An object of the invention is to provide alternately powershifted, plural powerpath transmissions with additional synchronized ratio coverage and powershifting of the additional ratio coverage.

According to a feature of the invention, a powershift transmission includes input and output drives adapted to be connected to a prime mover and a load; a first gear assembly including a powerpath having at least one step ratio gear and a synchronizer clutch for drivingly connecting the powerpath with one of the drives via the step ratio gear; a second gear assembly including at least one step ratio and a synchronizer clutch for drivingly connecting the step ratio with the other drive; and a powershift friction clutch drivingly interposed between the step ratio gear and the step ratio for drivingly interconnecting the step ratio gear and the step ratio when they are drivingly connected to their respective drives.

According to another feature of the invention, a powershift transmission includes input and output drives adapted to be connected to a prime mover and a load; a first gear assembly including first and second independent powerpaths each having at least one step ratio gear and a synchronizer . clutch for drivingly connecting the associated powerpath with one of the drives via the ratio gear; a second gear assembly including at least two step ratios and a synchronizer clutch for drivingly connecting selected ones of the two step ratios with the other drive; a first powershift friction clutch for drivingly connecting the first path ratio gear with the other drive when the first path ratio gear is drivingly connected to the one drive; and a second powershift friction clutch drivingly interposed between the second path ratio gear and the second gear assembly two step ratios for effecting a driving interconnection therebetween when the second path ratio gear and the selected one of the two step ratios are drivingly connected to their respective drives.

According to a feature of the invention, a powershift transmission includes input and output drives respectively connectable to an engine and a load; first and second independent powerpaths each including a powershift friction clutch alternately engageable to connect the associated path with one of the drives, at least two ratio gears, and clutch means engageable to drivingly connect the associated path with the other drive via selected ones of the ratio gears while the associated powershift clutch is disengaged; and an auxiliary gear assembly associated with one of the drives and one of the paths for changing the effective ratio of at least one of the ratio gears of the assoicated path while the powershift clutch of the associated path is disengaged.

BRIEF DESCRIPTION OF THE DRAWINGS

Two embodiments of the invention are shown in the accompanying drawings in which:

FIGURE 1 is a schematic view of the transmission looking in the direction of arrows 1-1 of FIGURE 2;

FIGURE 2 is a schematic view of the transmission looking in the direction of arrows 2-2 of FIGURE 1;

FIGURE 3 is a schematic view of the transmission looking in the direction of arrows 3-3 of FIGURE 1;

FIGURE 4 is a schematic view of an alternative embodiment of an auxiliary gear assembly shown in FIGURES 1 and 3;

FIGURE 5 is a detailed view of the transmission in FIGURES 1-3 with the gear assembly in relief and the transmission housing in section; and

FIGURE 6 is an enlarged sectional view of the auxiliary gear assembly in FIGURES 1 and 3.

Certain terminology referring to direction, motion, and environment will be used in the following description.  This terminology is for convenience in describing the invention and should not be considered limiting unless explicitly used in the appended claims.


DETAILED DESCRIPTION OF THE DRAWINGS

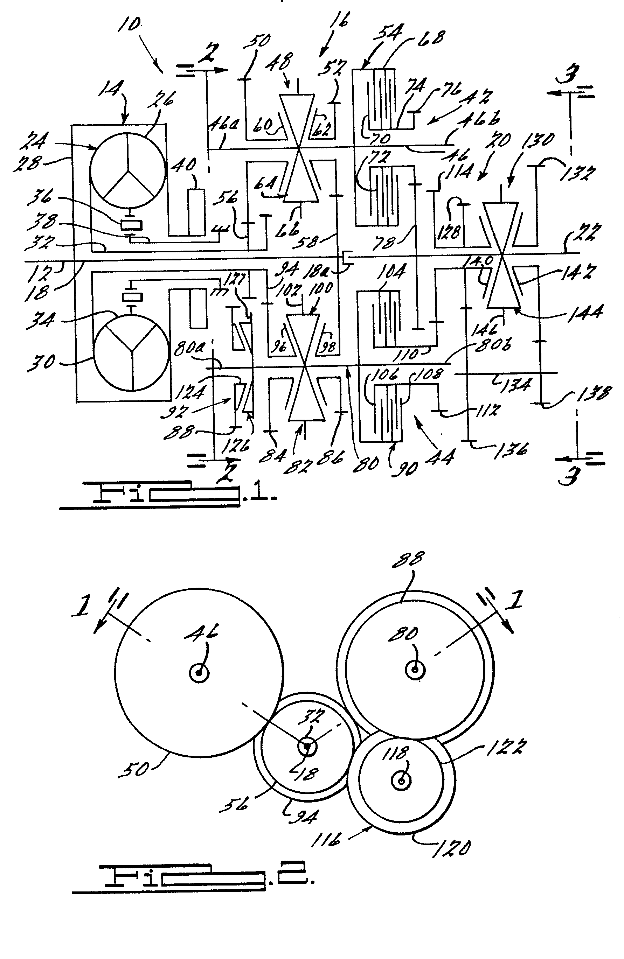

Looking first at FIGURE 1, therein is schematically illustrated a constant mesh, powershift transmission 10 adapted for use in an unshown land vehicle but not limited to such use.  Transmission 10 is preferably automatically shifted by an unshown control system which forms no part of the instant invention.  The transmission includes an input shaft or drive 12; a torque converter assembly 14; a main step ratio change gear assembly 16 driven by input shaft 12 through torque converter assembly 14 to provide low, first, second, and reverse speed ratios and driven directly by input shaft 12 through a bypass shaft 18 to provide third and fourth speed ratios; and a range or auxiliary step ratio gear assembly 20 including an output shaft 22 axially aligned with shafts 12 and 18.  Auxiliary gear assembly 20 as disclosed herein includes two selectable step ratios; however, the assembly may have more than two selectable step ratios.

Torque converter assembly 14 is conventional in that it includes a fluid coupling 24 of the torque converter type having an impeller 26 driven by input shaft 12 through a shroud 28, a turbine 30 hydrokinetically driven by the impeller, a sleeve shaft 32 driven by the turbine and extending into main gear assembly 16, and a runner or stator 34 which becomes grounded to an unshown housing via a one-way roller clutch 36 carried by a second sleeve shaft 38. Sleeve shaft 32 is supported for rotation by the unshown housing. Shroud 28 also drives a pump 40 for pressurizing the torque converter, for lubricating the transmission, and for selectively pressurizing friction clutches in gear assembly 16.

Sleeve shaft 32, which is supported for rotation by the unshown housing, provides a fluid power or torque converter driven shaft for driving low, first, second, and reverse speed ratios gears. Bypass shaft 18 is in continuous direct drive with input shaft or drive 12 and provides a torque converter bypass for driving third and fourth speed ratio gears. Bypass shaft 18 is supported for rotation within sleeve shaft 32 and at its right end 18a by the unshown housing. This arrangement of the bypass shaft with the third and fourth speed ratio gears negates the need of a separate torque converter bypass clutch.

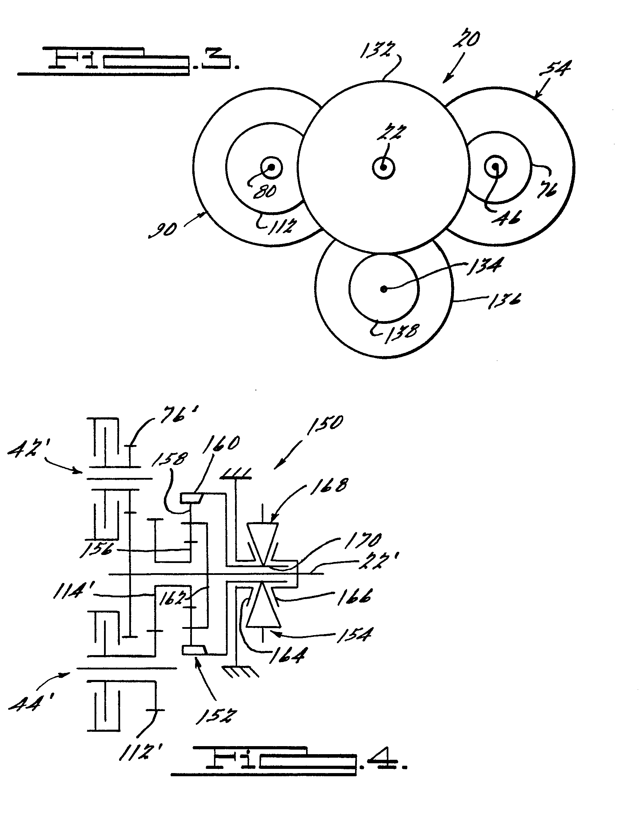

Looking now at FIGURES 1 and 2, the schematically illustrated main ratio gear assembly 16 includes two countershaft assemblies or powerpaths 42, 44 disposed about axes parallel to and radially outward of a common axis defined by the input and output shafts. Assembly 42 includes a shaft 46 rotatably supported at its ends 46a, 46b by the unshown housing, a double-acting synchronizer clutch 48, selectable forward speed step ratio gears 50, 52 rotatably supported on shaft 46, and a hydraulically actuated friction clutch 54. Step ratio gear 50 is directly driven by an input drive gear 56 nonrotatably secured to torque converter driven shaft 32. Step ratio gear 52 is directly driven by an input drive gear 58 nonrotatably secured to bypass shaft 18. Synchronizer clutch 48 may be a conventional, double-acting synchronizer having at either end generally designated friction and jaw clutch members 60, 62 respectively secured to gears 50, 52 and a center clutch mechanism 64 nonrotatably secured to shaft 46. Center clutch mechanism 64 includes friction and jaw clutch members which cooperate with friction and jaw clutch members in members 60, 62 in response to sliding movement of mechanism 64 along the axis of shaft 46. Such sliding movement of mechanism 64 frictionally couples one of the ratio gears 50, 52 with countershaft 46 to effect synchronism via the transmission input and then jaw or positive clutches the countershaft with the gear. Center clutch mechanism 64 includes a radially extending flange 66 which may be gripped in a conventional manner by an unshown shift fork to effect leftward and rightward sliding movement of the mechanism. Friction clutch 54 includes a housing 68 nonrotatably secured to shaft 46, two sets of interdigitated friction disks 70, 72, and a sleeve 74 rotatably supported by shaft 46. Disks 70 are nonrotatably secured to sleeve 74 and disks 72 are nonrotatably secured to housing 68. Both disk sets are axially moveable in housing 68 and are frictionally interconnected in response to hydraulic pressure being selectively applied to an unshown piston in housing 68. Sleeve 74 is nonrotatably secured to a drive gear 76. Drive gear 76 is in continuous mesh with an output gear 78 nonrotatably secured to output shaft 22 of range assembly 20.

Countershaft assembly 44 differs from assembly 42 mainly in that it further includes a reverse step ratio gear. Assembly 44 includes a shaft 80 rotatably supported at its ends 80a, 80b by the unshown housing assembly; a double-acting synchronizer clutch 82; selectable forward speed step ratio gears 84, 86 rotatably supported on shaft 80; a selectable reverse speed step ratio gear 88 rotatably supported on shaft 80; a hydraulically actuated friction clutch 90; and a reverse synchronizer clutch 92. Clutch 92 may be similar to clutches 48, 82 or of the type disclosed in previously mentioned U.S. Patent 4,246,993. Step speed ratio gear 84 is driven by an input drive gear 94 nonrotatably secured to torque converter driven shaft 32. Step ratio gear 86 is driven by the input drive gear 58 which, as previously mentioned, is nonrotatably secured to bypass shaft 18. Synchronizer clutch 82 is a double-acting clutch and may be identical to synchronizer clutch 48. Synchronizer clutch 82 includes at either end generally designated friction and jaw clutch members 96, 98 respectively secured to gears 84, 86 and a center clutch mechanism 100 nonrotatably

secured to countershaft 80. Center clutch mechanism 100 includes friction and jaw clutch members which cooperate with friction and jaw clutch members in members 96, 98 in response to sliding movement of mechanism 100 along the axis of countershaft 80. Sliding movement of mechanism 100 first frictionally couples one of the ratio gears 84, 86 with countershaft 80 to effect synchronism with the transmission input and then jaw or positive clutches the gear with the countershaft. Center clutch mechanism 100 includes a radially extending flange 102 which may be gripped in a conventional manner by an unshown shift fork to effect leftward and rightward sliding movement of the mechanism. Friction clutch 90 may be identical to friction clutch 54. Friction clutch 90 includes a housing 104 nonrotatably secured to shaft 80, two sets of interdigitated disks 106, 108, and a sleeve 110 rotatably supported by countershaft 80. Disks 106 are nonrotatably secured to sleeve 110 and disks 108 are nonrotatably secured to housing 104. Both disk sets are axially moveable in response to hydraulic pressure being selectively applied to an unshown piston in housing 104. Sleeve 110 is nonrotatably secured to a drive gear 112 rotatably supported on countershaft 80. Drive gear 112 is in continuous mesh with an output gear 114 rotatably supported on output shaft 22 and in range assembly 20.

Reverse ratio 88 gear is rotatably supported on shaft 80 and is driven by an idler gear assembly 116 seen in FIGURE 2. Idler gear assembly 116 includes a shaft 118 nonrotatably supported by the unshown housing, a gear 120 rotatably supported on shaft 118 and in continuous mesh with input drive gear 56 driven by torque converter driven shaft 32, and a gear 122 rotatably supported on shaft 118 and nonrotatably secured to gear 120. Gear 122 is in continuous mesh with reverse gear 88. Reverse synchronizer clutch 92 includes generally designated friction and jaw clutch member 124 nonrotatably secured to gear 88 and a sliding clutch mechanism 126. Sliding clutch mechanism 126 includes friction and jaw clutch members which cooperate with friction and jaw clutch members in members 124. Sliding movement of mechanism 126 first frictionally couples gear 88 with countershaft 80 to effect synchronism and then jaw or positive clutches gear 88 with the countershaft. Center clutch mechanism 126 includes a radially extending flange 127 which may be gripped in a conventional manner by an unshown shift fork to effect the sliding movement.

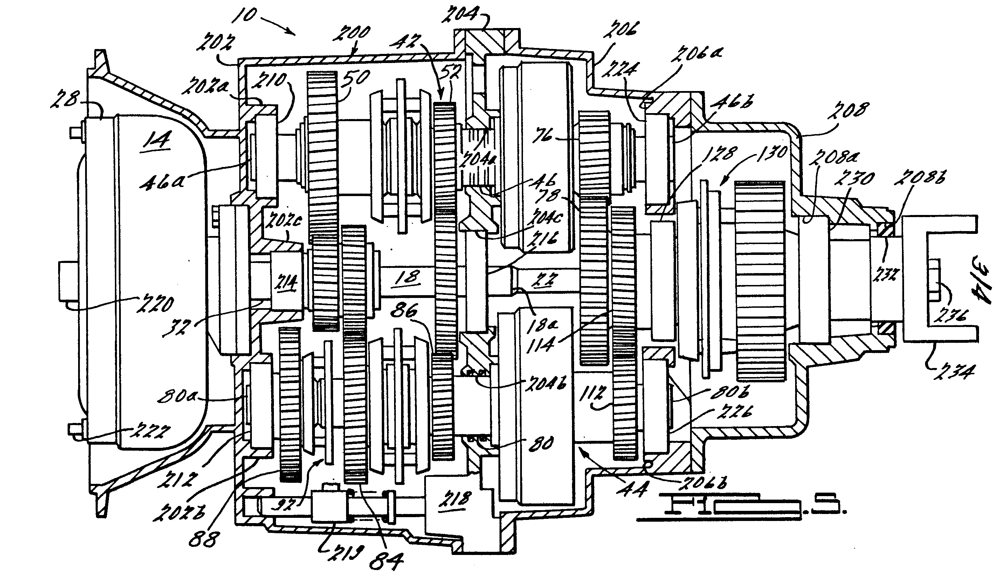

Looking now at FIGURES 1 and 3, auxiliary gear assembly 20 includes the output shaft 22, the output gear 78 nonrotatably secured to output shaft 22, the output gear 114 nonrotatably secured to a gear 128 and both rotatably supported on output shaft 22, a double-acting synchronizer clutch 130, a gear 132 rotatably supported on output shaft 22, a lay shaft 134, and gears 136, 138 nonrotatably secured to lay shaft 134 and in continuous mesh with gears 128 and 132 respectively. Lay shaft 134 is shown ninety degrees out of position in FIGURE 1 for clarity. Synchronizer clutch 130 may be substantially identical to synchronizer clutches 48, 82 and includes at either end generally designated friction and jaw clutch members 140, 142 respectively secured to gears 128, 132 and a center clutch mechanism 144 nonrotatably secured to output shaft 22. Center clutch mechanism 144 includes friction and jaw clutch members which cooperate with friction and jaw clutch members in members 140, 142 in response to sliding movement of mechanism 144 along the axis of output shaft 22. Sliding movement of mechanism 144 first frictionally couples one of the gears 128, 132 with the output shaft to effect synchronism with the transmission output and then jaw or positive clutches the gear to the output shaft. Center clutch mechanism 144 includes a radially extending flange 146 which may be gripped in a conventional manner by an unshown shift fork to effect leftward and rightward sliding movement of the mechanism.

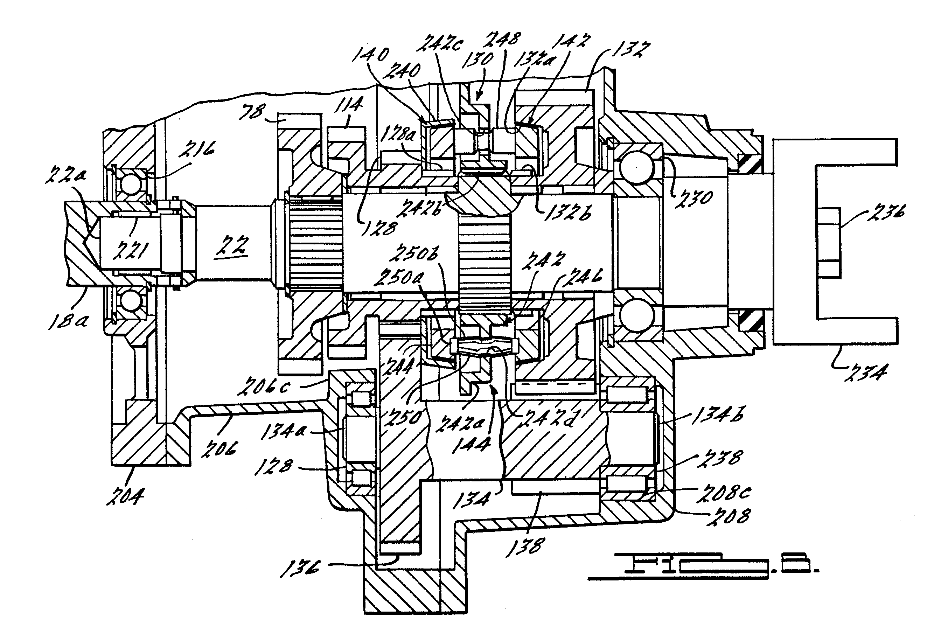

The fragmentary schematic of FIGURE 4, illustrates an alternative auxiliary gear assembly 150 which may be used in lieu of the auxiliary gear assembly 20 illustrated in FIGURES 1-3. Components in Figure 4 which are substantially identical to components in Figures 1-3 are identified by like numerals suffixed with a prime. Auxiliary gear assembly 150 includes a gear 78' nonrotatably secured to an output shaft 22' and driven by a gear 76' in a powerpath 42', a gear 114' rotatably supported on output shaft 22' and driven by a gear 112' in a powerpath 44', a three element planetary gear assembly 152 and a double-acting synchronizer clutch 154. Planetary gear assembly includes a sun gear 156, a plurality of planet gears 158, and a ring gear 160 defining the three elements. Sun gear 156 is rotatably supported on output shaft 22' and fixed to gear 114'. Planet gears 158 are supported on a planet gear carrier 162 nonrotatably secured to output shaft 22'. Synchronizer clutch 154, which may be substantially the same as synchronizer clutches 48, 92, includes at either end generally designated friction and jaw clutch members 164, 166 and a center clutch mechanism 168. Friction and jaw clutch members 164, 166 are respectively secured to the unshown housing assembly and to output shaft 22'. Center clutch mechanism 168 is nonrotatably secured to ring gear 160 via a sleeve or quill shaft 170 rotatable relative to output shaft 22'. Center clutch mechanism 168 includes friction and jaw clutch members which cooperate with friction and jaw clutch members in members 164, 166 in response to sliding movement of the mechanism along the axis of output shaft 22'. Planetary gear assembly is locked up to provide a one-to-one ratio in response to rightward engagement of clutch mechanism 168 and ring gear 162 is grounded to provide a reduced speed ratio in response to leftward engagement of the center clutch mechanism.

Looking now at FIGURE 5, therein transmission 10 of FIGURE 1 is shown in detailed relief within a housing assembly 200. Lay shaft 134 and gears 136, 138 of the range assembly are not shown in FIGURE 5. Details of the range assembly are shown in the sectional elevation view of FIGURE 6. Sectional detail of main ratio gear assembly 16 is shown and described in previously mentioned application serial number 178, 429. All components of FIGURES 5 and 6 which are identical to components in the previously described FIGURE 1-3 are identified by like numerals.

Housing assembly 200 includes a forward housing member 202, a plate member 204, an intermediate housing member 206, and a rear housing member 208. Forward housing member contains step ratio gears 50, 52 which are selectable to respectively provide first and third speed ratios; step ratio gears 84, 86 which are selectable to respectively provide low-second and fourth speed ratios; and step ratio gear 88 which is selectable to provide reverse and deep reverse speed ratios. The housing members may be secured together by conventional means such as bolts or screws, not shown. Forward housing member 202 is integrally formed with a bell housing portion circumscribing torque converter assembly 14 and with bearing supports 202a, 202b, and 202c for ball bearings 210, 212, and 214 which rotationally support countershaft ends 46a, 80a and sleeve shaft 32.

Plate member 204 includes throughbores 204a and 204b for passage of shafts 46, 80 and a bore 204c having a ball bearing 216 disposed therein for rotationally supporting end 18a of bypass shaft 18 therein. Plate member 204 also includes several unshown oil passages for directing lubricating oil to various portions of the transmission and for directing oil to actuate the synchronizer and friction clutches in the main ratio change gear assembly. Oil for actuating the friction clutches flows across the interface of shafts 46, 80 and openings 204a, 204b.

Plate member 204 may further define actuator cylinders for the synchronizer clutch. An actuator 218 for reverse synchronizer clutch 92 is shown in relief with a shift fork 219 partially broken away for clarity.

As may be seen in FIGURE 6, end 18a of bypass shaft includes a pilot or blind bore having a roller bearing therein for rotationally supporting an end 22a of output shaft 22. The forward or left end of bypass shaft 18, which is not shown, is spline connected to a hub 220 rigidly formed with torque converter should 28. The front portion of shroud 28 includes a plurality of studs 222 for connecting the transmission input to an engine or prime mover; however, hub 220 may be splined for this purpose. Hub 220 and studs 222 define the schematically illustrated input shaft or drive 12 shown in FIGURE 1.

Intermediate housing member 206 includes bearing supports 206a, 206b for ball bearings 224 and 226 which rotationally spport countershaft ends 46b and 80b. Looking momentarily at FIGURE 6, member 206 also includes a bearing support 206c for a roller bearing 228 which rotationally supports a forward end 134a of lay shaft 134.

Rear housing member 208 includes a bearing support 208a for a ball bearing 230 which rotationally supports the rear end of output shaft 22 and a recess 208b for a seal 232 running on the neck of an output yoke 234 splined to the output shaft and retained thereto by a bolt 236. Looking momentarily at FIGURE 6, member 208 also includes a bearing support 208c for a roller bearing 238 which rotationally supports the rear end 134b of lay shaft 134.

Looking now at FIGURES 5 and 6, gear 78 which is in constant mesh with gear 76 of powerpath 42, is splined to output shaft 22 and hence drives directly out to yoke 234 whenever powerpath 42 is in a driving mode. Gear 114, which is in constant mesh with gear 112 of powerpath 44, is rotatably supported on the output shaft and integrally formed with gear 128. Gear 114 drives directly to the output shaft when synchronizer clutch 130 is engaged left and drives to the output shaft via speed reduction gears 128, 136, 138, 132 when the synchronizer clutch is engaged right. Synchronizer clutch 130 is of a type well-known in the prior art and is substantially identical to synchronizer clutches 48, 82. The generally designated friction and jaw clutch members 140 in FIGURE 1 are respectively defined by a cone clutch member 240 and spline or jaw teeth 128a on the outside diameter of an annular extension of gear 128. Cone clutch member 240 is fixed against rotation relative to gear 128 by spline teeth 128a. The generally designated friction and jaw clutch members 142 in FIGURE 1 are respectively defined by cone clutch surface 132a and spline or jaw teeth 132b formed by gear 132. Center clutch mechanism 144 includes a sleeve 242 integrally formed with offset and radially extending flange portion 242a, a pair of friction cone rings 244, 246 rigidly secured together by three circumferentially positioned pins 248, and three spring pins 250 alternately spaced between pins 248. Sleeve 242 includes jaw clutch teeth 242b slidably splined to output shaft 22 and engageable with teeth 128a, 132b. Pins 248, which extend through three chamfered openings 242c circumferentially positioned in flange 242a, have at their centers an annular groove with chamfered ends. The inside diameter of each chamfered opening 242c is slightly greater than the major outside diameter of each pin 248. The annular grooves are slightly wider than the flange. Spring pins 250, which extend through three chamfered openings 242d alternately spaced between opening 242c, may be of a type well-known in the prior art or of the type disclosed in previously mentioned application serial number 288,724. The latter type spring pins are formed from sheet metal and each includes ends 250a and a plurality of leaf springs 250b extending between the ends with the leafs bowed radially outward in barrel slave fashion and pushed radially inward toward each other midway between the ends to define a detent groove.

Center clutch mechanism 144 is shown in the neutral position, therefore both gears 128, 132 are disengaged, the cone-shaped friction surfaces are slightly spaced apart, and the grooves of pins 248, 250 are concentrically disposed within the respective openings 242c, 242d. When it is desired to couple gear 128 to output shaft 22, flange 242a is moved axially to the left by an appropriate shift mechanism not shown. Such movement, which is initially transmitted through spring pins 250, shifts cone ring 244 into contact with cone clutch member 240. This contact (provided gear 128 and output shaft 22 are not in synchronism) causes pins 248 to move out of concentric alignment with opening 242c, whereby the chamfers of openings 242c and the groove shoulders of pins 248 engage to prevent further axial movement of the flange due to torque at the interface of the chamfers. As synchronism is reached, the torque at the interface of the chamfers diminishes and the axial force from the flange moves pins 248 back into concentric alignment with openings 242c, thereby allowing engagement of jaw clutch teeth 242b with jaw clutch teeth 128a. Gear 132 is coupled to output shaft 72 in the same manner by moving the flange rightward.

## Operation

In reviewing the operation of transmission 10, it will be assumed that the transmission is installed in a land vehicle having an internal combustion engine, that the engine crankshaft is connected to torque converter shroud 28 by studs 222, and that the transmission includes a shift control system selectable to an automatic and/or a semiautomatic mode of operation. The automatic mode will be described. Such control systems are well-known and are often made responsive to parameters such as engine load and vehicle speed. It will also be assumed that the control system includes a shift control lever which is selectively placed in a neutral position to disengage the transmission, in a drive position to effect forward movement of the vehicle in first through fourth, in a low position to effect slow forward movement, and in a deep reverse or reverse position to effect reverse movement. The control system referred to herein is by way of example only and does not form part of the invention herein or any preferred form of a control system.

With the shift control lever in neutral and the engine running, bypass shaft 18 and torque converter driven shaft 32 rotate input drive gears 56, 58, 94 and in turn selectable step ratio gears 50, 52 in powerpath 42 and selectable step ratio gears 84, 86, 88 in powerpath 44; synchronizer clutches 48, 82 are engaged left, thereby connecting gears 50, 84 to their respective countershafts 46, 80 to provide first and second speed ratios; friction clutches 54, 90 are disengaged; and synchronizer clutch 130 is engaged left, thereby connecting gears 114, 128 directly to output shaft 22.

Assuming now that a vehicle operator places the shift control lever in drive and wishes to accelerate the vehicle in a forward direction to a speed which will cause the control system to sequentially upshift through each of the four forward speed ratios of first through fourth. When the shift lever is placed in drive, the control system engages powershift clutch 54 and the vehicle moves forward in the first speed ratio at a rate determined by accelerator depression. As engine load decreases and/or vehicle speed increases predetermined amounts, powershift clutch 90 engages while powershift clutch 54 disengages to effect drive in the second speed ratio. As engine load further decreases and/or vehicle speed further increases, center clutch mechanism 64 of synchronizer clutch 48 moves rightwardly to firstly disconnect gear 50 from countershaft 46, to secondly frictionally connect gear 52 to countershaft 46 to effect synchronism therebetween, and to thirdly engage the associated jaw clutch members. Further, engine load decreases and/or engine speed increases effect engagement of powershift clutch 54 while powershift clutch 90 is being disengaged to effect drive in the third speed ratio. The sequence for upshifting into the fourth speed ratio should be obvious from the foregoing. Downshifting is merely the reverse of the upshift sequence.

Assuming now that the vehicle operator wishes to move the vehicle in the reverse direction, when the shift control lever is placed in the reverse position, the control system maintains synchronizer clutch 130 engaged left, moves reverse synchronizer clutch 92 leftwardly to synchronize gear 88 with countershaft 80, then engages the jaw clutch members, and then completes the shift into the reverse speed ratio by engageing powershift clutch 90. Should the vehicle operator place the shift control lever in deep reverse, the control system will engage synchronizer clutch 130 right, engage synchronizer clutch 92 left, and then complete the shift into the deep reverse speed ratio by engaging powershift clutch 90.

The position of first speed ratio gear 50 on countershaft 46 and reverse speed ratio gear 88 on countershaft 80 allows the vehicle operator to powershift between first and reverse or more accurately and importantly to reverse the rotational direction of output shaft 22 substantially instantaneously. Such powershifting is accomplished by moving the shift control lever between drive and reverse and by programming the control system to momentarily delay disengagement of the reverse synchronizer clutch. Such forward-reverse shifting greatly enhances the operator's ability to rock the vehicle as is often necessary in snow and mud conditions.

. Assuming now that the vehicle operator wishes to move the vehicle forward under the high power of the low speed ratio when the shift control lever is placed in low, the center clutch mechanisms of synchronizer clutches 82, 130 are moved left and right respectively to effect synchronism and the jaw clutching therebetween; powershift clutch 90 is then engaged to complete the low speed ratio drive between input drive 12 and output shaft 22. The control system may be configured to automatically shift the transmission between low through fourth, rather than first through fourth and may provide for utilization of only deep reverse. Further, the forward-reverse powershifting mentioned in the preceeding paragraph may be between first and deep reverse.

By way of example only, the numerical value or quotient of the speed or step ratios between input and output shafts 12, 22 of transmission 10 are as follows: low gear 8.03, first 4.053, second 2.21, third 1.422, fourth 1.000, reverse 2.344, and deep reverse 8.489.

One embodiment of the instant invention has been disclosed for illustrative purposes. Many variations and modifications of the disclosed embodiment are believed to be within the spirit of the invention. The following claims are intended to cover the inventive portions of the disclosed embodiment and the variations and modifications within the spirit of the invention.

0110538

-21-

CLAIMS

WHAT IS CLAIMED IS

1. In a powershift, step ratio transmission (10) including input (12) and output (22) drives respectively connectable to an engine and a load; plural independent powerpaths (42, 44) each having associated therewith a powershift friction clutch (54, 90) alternately engageable to connect the associated path with one (22) of the drives, at least one step ratio gear (50, 84), and clutch means (48, 82, 92) engageable to drivingly connect the associated path with the other drive (12) via selected ones of the ratio gears while the associated powershift clutch is disengaged; characterized by: an auxiliary gear assembly (20) associated with said one drive and one of said paths and shiftable between at least two positions for changing the effective ratio of at least one of the ratio gears of the associated path while the powershift clutch of the associated path is disengaged.

2. The transmission of Claim 1, wherein the step ratio gears respectively associated with said one and said other path are for providing two sequential speed ratios between the input and output drives and said auxiliary gear assembly changes the effective ratio of the gear (84) associated with said one path from a speed ratio succeeding the speed ratio of the gear in the other path to a speed ratio preceding the speed ratio of the gear in the other path.

3.  The transmission of Claim 1, wherein said other drive is said input drive and said one drive is said output drive.

4.  The transmission of Claim 1, wherein the ratio gear (50) of another of said paths provides a first speed ratio between said input and output drives, and said ratio gear (84) of said one path provides a second speed ratio between said input and output drives when said auxiliary gear assembly (20) is in said first position and a low speed ratio between said input and output drives when said auxiliary gear assembly is in said second position.

5.  The transmission of Claim 1, 2, 3, or 4 wherein each of said paths includes at least two step ratio gears (84, 86 and 50, 52) and said clutch means included a double-acting synchronizer clutch (48, 82).

6.  The transmission of Claim 4, further including a reverse step ratio gear (88) associated with said one path and drivingly connectable to said other drive via said clutch means associated with said one path, said reverse ratio gear for providing a reverse speed ratio between said input and output drives when said auxiliary gear assembly is in said first position and a deep reverse speed ratio between said input and ouput drives when said auxiliary gear assembly is in said second position.

7.  The transmission of Claim 6 wherein each of said paths includes at least two forward speed step ratio gears (84, 86 and 50, 52), and said clutch means includes a double-acting synchronizer (48, 82) clutchingly disposed between the two forward ratio gears in each path and a separate synchronizer clutch (92) associated with the reverse ratio gear.

8. The transmission of Claim 1, wherein said auxiliary gear assembly includes:

a driveshaft (22) defining said one drive;

a lay shaft (134);

first (128) and second (132) gear means rotatably mounted on said driveshaft, said first gear means in direct driving relation (112, 114) with said associated path via the associated powershift clutch (90), and said second gear means in driving relation with said first gear means via said lay shaft; and

synchronizer clutch means (130) operative to effect driving connections between said driveshaft and selected ones of said first and second gears while said powershift clutch of said associated path is disengaged.

9. The transmission of Claim 1, wherein said auxiliary gear assembly includes:

a driveshaft (22) defining said one drive;

a plural speed ratio, planetary gear assembly (150) having one planetary gear element (156) in direct driving relation with said associated path via said associated powershift clutch (90) and a second planetary gear element (158) in direct driving relation with said driveshaft; and

synchronizer clutch means (130) operative while the powershift clutch of said associated path is disengaged to selectively shift said planetary gear assembly between said plural ratios.

0110538

10. The transmission of Claim 8 or 9, wherein each of said paths includes at least two step ratio gears (84, 86 and 50, 52) and said clutch means includes a double-acting synchronizer clutch (48, 82).

11. The transmission of Claim 8 or 9, wherein each of said paths includes at least two forward speed step ratio gears (84, 86 and 50, 52); said one path includes a reverse speed step ratio gear (88); and said clutch means includes a double-acting synchronizer (48, 82) clutchingly disposed between the two forward ratio gears in each path and a separate synchronizer clutch (92) associated with the reverse ratio gear.

Fig.1.

Fig.2.

2/4

FIG.3.

FIG.4.

0110538

FIG. 8.

4/4

0110538